# EUROPÄISCHE PATENTSCHRIFT

(11) **EP 0 614 794 B1**
(45) Veröffentlichungstag und Bekanntmachung des Hinweises auf die Patenterteilung: **25.02.1998**
(21) Anmeldenummer: 93113404.3
(22) Anmeldetag: 23.08.1993
(51) Int. Cl.: B62B 3/10

(54) **Transportgestell**
Transport rack
Châssis de transport

(30) Priorität: 09.03.1993 DE 9303410 U; 09.08.1993 EP 93112748
(43) Veröffentlichungstag der Anmeldung: 14.09.1994
(73) Patentinhaber: Zuiderduin, Albert, 47877 Willich (DE); Dick, Toni, 52372 Kreuzau (DE)
(72) Erfinder: Zuiderduin, Albert, 47877 Willich (DE); Dick, Toni, 52372 Kreuzau (DE)
(74) Vertreter: Castell, Klaus, Dr.-Ing.

(56) Entgegenhaltungen:
- EP-A- 0 121 745
- DE-A- 3 619 262
- US-A- 3 527 359

## Beschreibung

Die Erfindung betrifft ein Transportgestell mit den Merkmalen des Oberbegriffs ds Patentanspruchs 1.

Ein derartiges Transportgestell ist aus der EP-A-0 121 745 bekannt. Der dort beschriebene Transport- und Verkaufswagen benötigt spezielle höhenverstellbare und herausnehmbare Etagen, die an den beiden Kopfenden mit einer in der ganzen Breite der Etage in der Etage untergebrachten drehbaren Stange versehen sind. An den beiden Enden der Stange sind im rechten Winkel zur Stange versehen sind. An den beiden Enden der Stange sind im rechten Winkel zur Stange rechtwinklige Haken angebracht, und in der Mitte der Stange befindet sich ein Hebel in Form eines Flachstabes. Die Etagen haben somit verstellbare Haken, die über iene speziell Mechanik so ausgebildet sind, daß sie entweder in die Löcher der Lcohreihe eingreifen oder - um 90 Grad gedreht - eine freie Bewegeung der Etagenträger nach oben und unten innerhalb des Transport- und Verkaufswagens erlauben.

Ausgehend von dieser Situation liegt der Erfindung damit dieAufgabe zugrunde, ein Transportgestell der eingangs beschriebenen Art so weiter zu entwickeln, daß der Transportflächenverlust vermieden wird und daß die in den Außenabmessungen einer bestimmten Norm unterliegenden Transportbehälter von den Einlegeböden aufgenommen werden können, ohne daß hierzu die Außenmaße des Transportgestells geändert werden müssen.

Diese Aufgabe ist nach der Erfindung mit den Merkmalen des Patentanspruchs 1 gelöst.

Durch diese Ausbildung können die Zwischenböden wie bisher getragen werden, ohne daß indessen Querschnittsbereiche der Säulen in den Flächenbereich dieser Zwischenböden hineinragen. Die Fläche der Zwischenböden wird nun vollständig ausnützbar und kann vollgestellt werden mit Behältern, deren Außenabmessungen der Euro-Norm entsprechen. Die Außenabmessungen sind unverändert geblieben, so daß das Geste auch auf eine Euro-Palette gestellt und von dieser transportiert werden kann. Werden auf der Unterseite des Grundrahmens Räder angeordnet, entsteht ein Transportwagen.

Nach einer Ausgestaltung der Erfindung ist vorgeschlagen, daß die freien Enden der Schenke der die Steckstücke bildenden Winkelprofilstücke mit einem schmalen, überstehenden Bereich rechtwinklig nach innen umgebogen sind zur weiteren Umfassung je einer eingesteckten, vom Winkelprofil gebildeten Säule. Hierdurch wird eine höhere Eigenstabilität erreicht. Bei dieser Anordnung bedarf es keiner zusätzlichen Mittel mehr zur Stabilisierung der Säulen und es muß auch keine Stabilisierung der Säulen über die eingelegten Zwischenböden erfolgen. Die Säulen sind vielmehr in ihren Steckstücken festgehalten und geführt. Da auch die Steckstücke selbst offene Winkelprofile sind, nehmen auch sie keinerlei Fläche der Zwischenböden in Anspruch.

Eine alternative Ausgestaltung der Erfindung sieht vor, daß der eine Schenkel des Winkelprofils auf seiner ganzen Länge eine Einprägung nach innen aufweist, wobei diese Einprägungen in gewünschtem Abstand untereinander Einhängeschlitze für die Auflagearme aufweisen, deren untere Oberfläche je eine Auflagestütze bildet. Diese Ausgestaltung stellt eine bevorzugte Ausführungsform dar, die kostengünstig herstellbar, einfach handhabbar und zuverlässig ist. Diese Ausführungsform ist besonders stabil und widerstandsfähig und daher besonders geeignet für den rauhen Alltagsbetrieb. Das Profil kann auf einfache Art und Weise gewalzt werden, wobei die Einhängeschlitze noch am flachen Band vor dem Walzvorgang z. B. durch Stanzung eingebracht werden können.

Eine ergänzende Ausgestaltung sieht vor, daß bei eingesetztem Winkelprofil in einer geeigneten Höhenlage mindestens ein Ouersteg im Abstand zu dem zum ersten Schenkel rechtwinklig angeordneten weiteren Schenkel des Winkelprofils und parallel zu diesem angeordnet ist, so, daß darauf jeweils ein Auflagearm eines Einlegebodens abgelegt werden kann. Dies ist besonders günstig, um leere Einlegeböden mit einem solchen Transportgestell oder Transportwagen in großer Zahl und bei hoher Stabilität des Transportgestells oder Transportwagens zurückzutransportieren. Hierzu werden die eingesteckten Winkelprofile einfach gewendet, so daß sich die Einprägungen an den Langseiten nicht mehr gegenüberliegen sondern parallel zu den Langseiten liegen, wodurch die Einlegeböden zwischen diesen Winkelprofilen jetzt einfach aufeinandergelegt werden können. Mit zunehmender Stapelhöhe entstehen allerdings beim Transport große Querkräfte auf die Winkelprofile, so daß diese dazu neigen, sich nach oben aufzubiegen, so daß die Einlegeböden herausfallen. Wird nun in entsprechend kritischen Höhenlagen der Erfindung entsprechend ein Quersteg so vorgesehen, daß in diesen Quersteg an jedem Winkelprofil in gleicher Höhenlage ein Einlegeboden eingehängt werden kann, so werden die Winkelprofile wieder von diesem Einlegeboden zusammengehalten und damit stabilisiert. Eine Aufbiegegefahr besteht nicht mehr. Damit kann mit dem erfindungsgem. Transportgestell oder Transportwagen eine gegenüber dem bekannten Stand der Technik bedeutend größere Anzahl von Einlegeböden gleichzeitig leer transportiert werden, ohne daß die Gefahr besteht, daß der Transportwagen oder das Transportgestell hierdurch beschädigt wird.

Auch ist nach der Erfindung noch vorgeschlagen, daß allen Auflagestützen jeweils im Wechsel eine außen angebrachte Markierung zugeordnet ist, um Auflagestützen gleicher Höhe erkennbar zu machen. Hierdurch kann ein versehentliches Schiefeinhängen vermieden werden. Das Einhängen in gleicher Höhenlage wird erleichtert.

Schließlich ist nach der Erfindung noch vorgeschlagen, daß etwa auf der Hälfte der sich gegenüberliegenden langgestreckten Rahmenelemente des Grundrahmens jeweils zwei weitere Steckstücke als Fixierung für je ein weiteres Winkelprofil vorgesehen sind. Hierdurch entsteht ein Grundrahmen nach Europalettenmaß, so daß eine Europalette ein solches Transportgestell aufnehmen kann, das wegen der mittleren Winkelprofile zwei unterschiedlich mit Einlegeböden auszustattende Bereiche aufweist, so daß die Verwendungsmöglichkeiten erweitert werden.

Die Erfindung soll nun anhand der beigefügten Zeichnungen näher erläutert werden.

Es zeigen:
- Figur 1: Transportgestell in der Form als Transportwagen perspektivisch in schematischer Darstellung mit verschiedenen Einlegeböden
- Figur 1a: Darstellung wie Figur 1 mit mittleren Winkelstücken
- Figur 2: Perspektivisch eine als Winkelprofil ausgebildete Säule in Anordnung für den leeren Rücktransport mit Quersteg und eingehängtem Auflagearm eines Zwischenbodens
- Figur 3: Winkelprofil perspektivisch wie Fig. 2 jedoch ohne angedeutete Zwischenböden
- Figur 4: Querschnitt durch eine Vierkantsäule des Standes der Technik mit schraffiert angedeuteter behindernder Fläche
- Figur 5: Querschnitt durch ein erfindungsgem. Winkelprofil mit Kreisbogen, der die Maximalabmessungen der zu transportierenden Normbehälter umschreibt
- Figur 6: Querschnitt durch ein erfindungsgem. Winkelprofil mit Einprägung über die gesamte Länge und Einhängeschlitz sowie Quersteg
- Figur 7: Erfindungsgem. Winkelprofil in Draufsicht mit Ausbruch und eingehängtem Auflagearm in winkliger Ausführung
- Figur 8: Darstellung wie Fig. 7 jedoch mit geradem Auflagearm eines Einlegebodens.

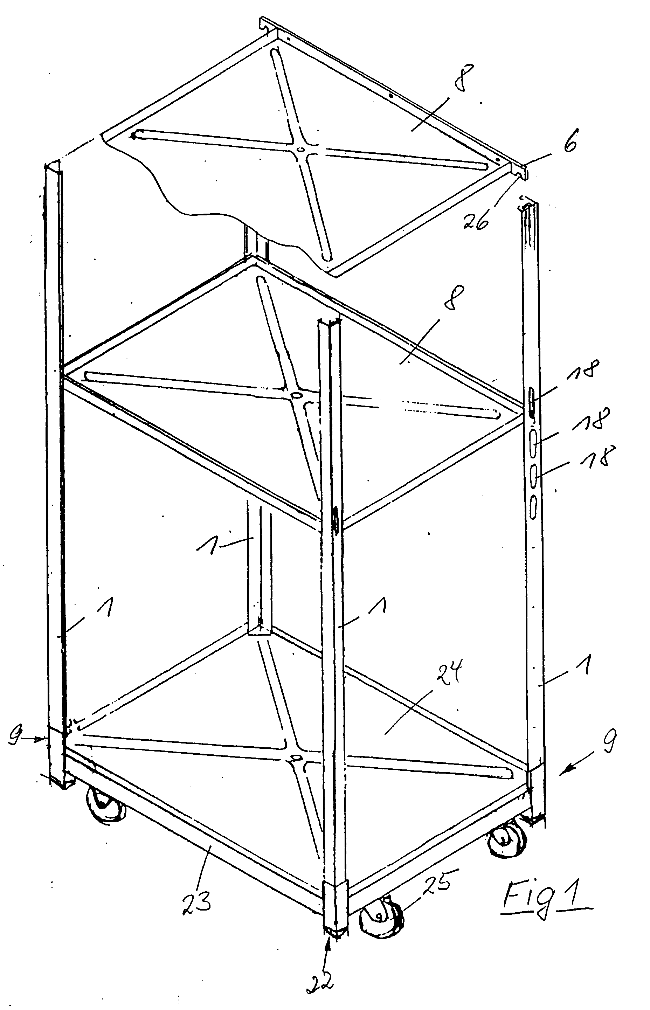

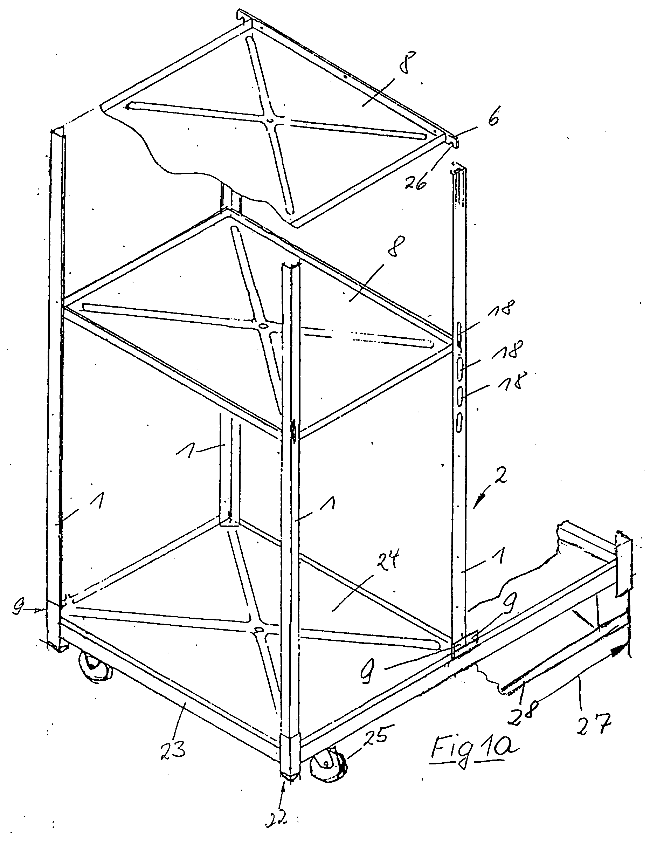

Fig. 1 zeigt ein erfindungsgem. Transportgestell mit Rädern 25 und somit in der Form eines Transportwagens, der im wesentlichen aus einem rechtwinkligen Grundrahmen 23 besteht, der an seinen vier Ecken winklige, vertikal angeordnete Steckstücke 9 aufweist, die jeweils an ihrer Unterseite ein Auflagestück 22 aufweisen, zur Abstützung der einzusteckenden Säulen 1. Der Grundrahmen weist einen Boden 24 auf, der, falls gewünscht, auch wie ein Einlegeboden 8 ausgebildet sein kann. Der Grundrahmen 23 kann wie im Ausführungsbeispiel auf seiner Unterseite vier Rollen 25 aufweisen, so daß aus dem Transportgestell ein Transportwagen wird.

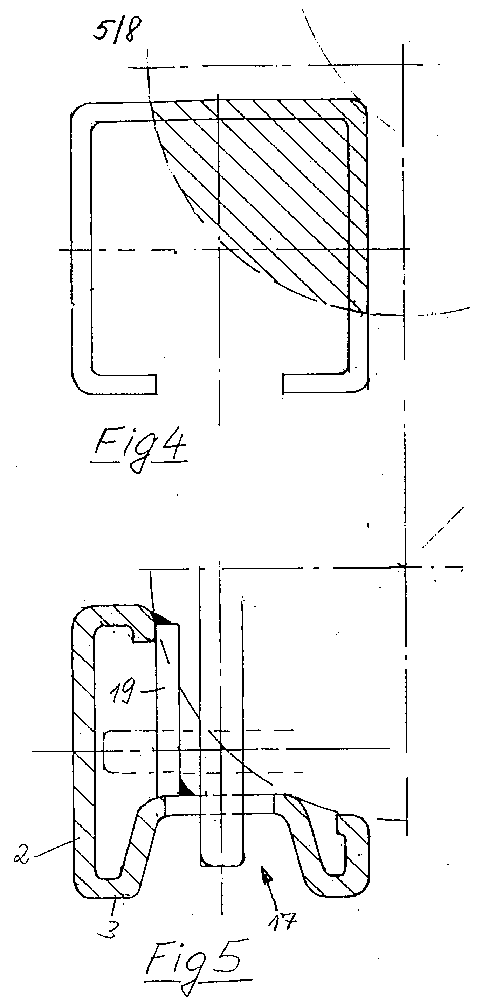

Die Säulen 1 sind im Stand der Technik etwa als Vierkantrohr ausgebildet, so wie dies Fig. 4 zeigt. Die in Fig. 4 dargestellte schraffierte Fläche entspricht den größten äußeren Abmessungen einer Euro-Normfür Transportbehälter, die auf Paletten transportiert werden können. Es ist sofort zu erkennen, daß solche Behälter bei Transportwagen des Standes der Technik mit Säulen von der Querschnittsform nach Fig. 4 nicht auf den jeweiligen Einlegeböden 8 eingestellt werden können. Dies gilt auch für den Boden 24, weil ja einerseits diese Säulen bis unten durchgeführt sein müssen und weil außerdem im Stand der Technik die Steckstücke 9 ebenfalls als Vierkantrohr ausgebildet sind und damit noch mehr Platz wegnehmen als die Säulen selbst.

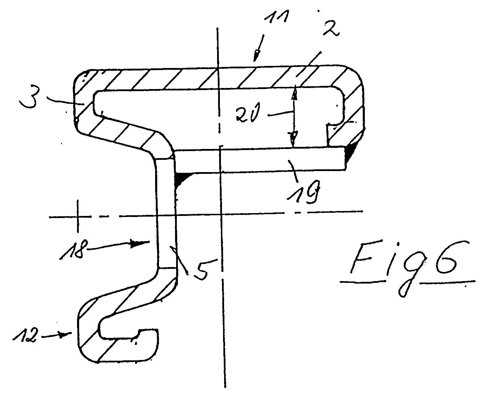

Erfindungsgem. sind die Säulen 1 als Winkelprofil 2 ausgebildet (siehe Fig. 5) mit einem ersten Schenke 3 und einem weiteren, rechtwinklig dazu angeordneten Schenkel. Dieses Winkelprofil 2 kann eingesteckt werden in Steckstücke 9, die ebenfalls als das Winkelprofil 2 mindestens auf den Außenseiten 11 und 12 mit den Schenkeln 13 und 14 umfassende Winkelprofilstücke 10 ausgebildet sind. Die jeweils freien Enden der Schenkel 13 und 14 können noch einmal in einem schmalen, überstehenden Bereich 15 und 16 rechtwinklig umgebogen sein und so das innere Winkelprofil 2 weiter umfassen und sicher halten. Auch die freien Enden der Schenkel 3 und der hierzu rechtwinklig angeordneten Schenke der Winkelprofile 2 können in einem schmalen Bereich noch ein erstes Mal und bei Bedarf in diesem umgebogenen Bereich noch ein zweites Mal jeweils rechtwinklig umgebogen sein, wie dies in den Fig. 5 bis 6 deutlich dargestellt ist.

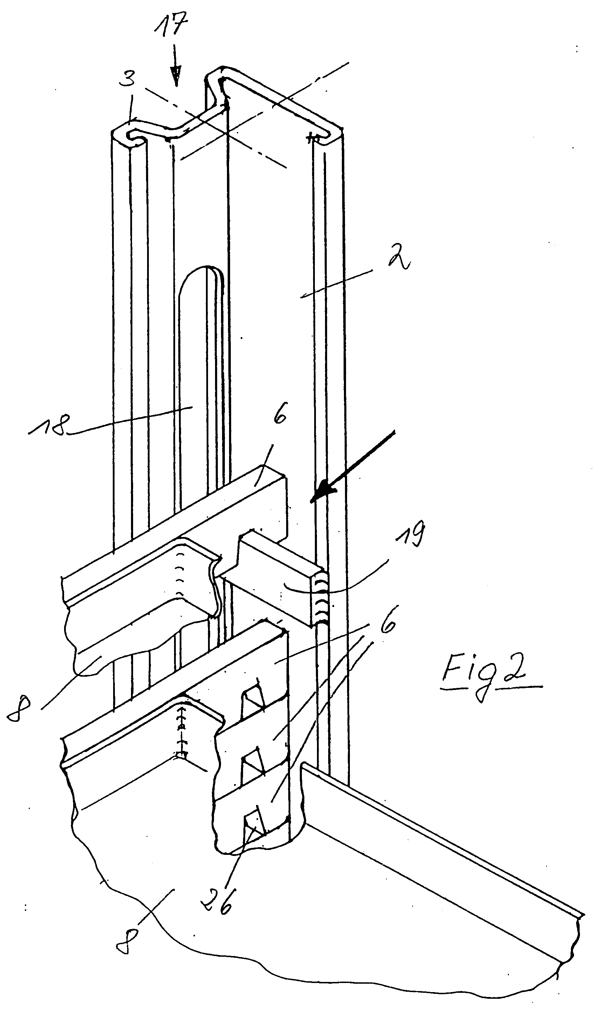

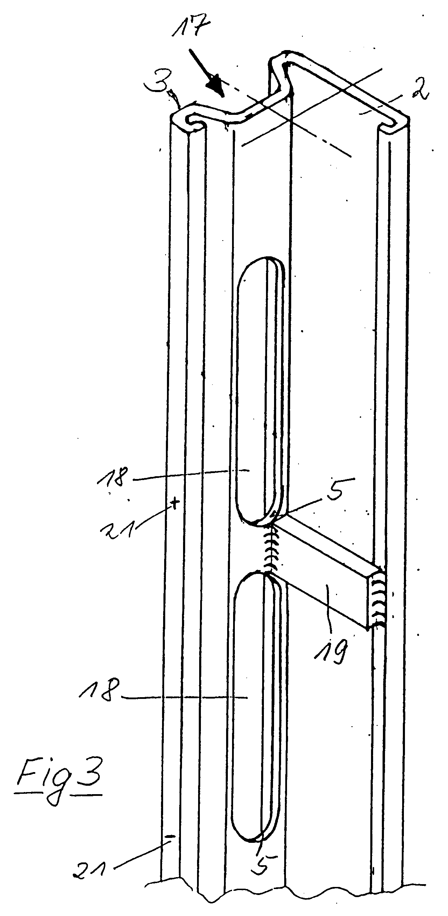

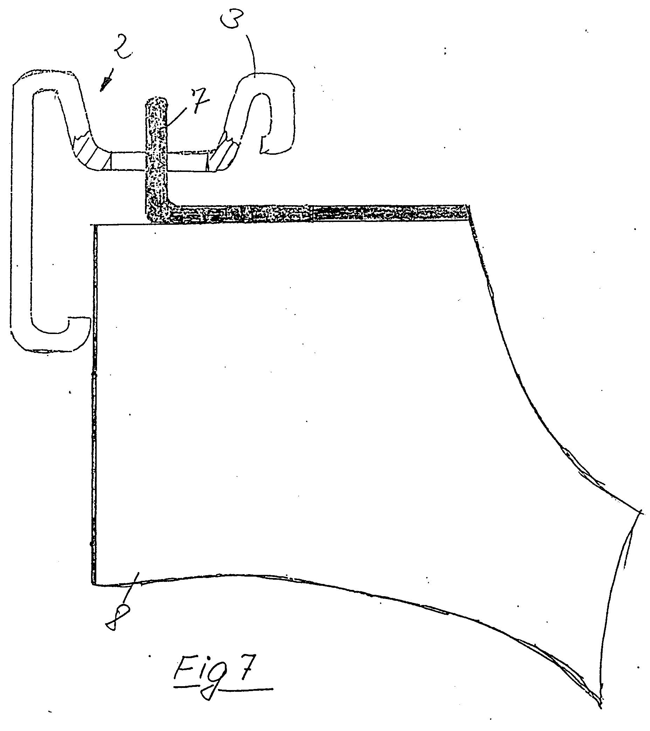

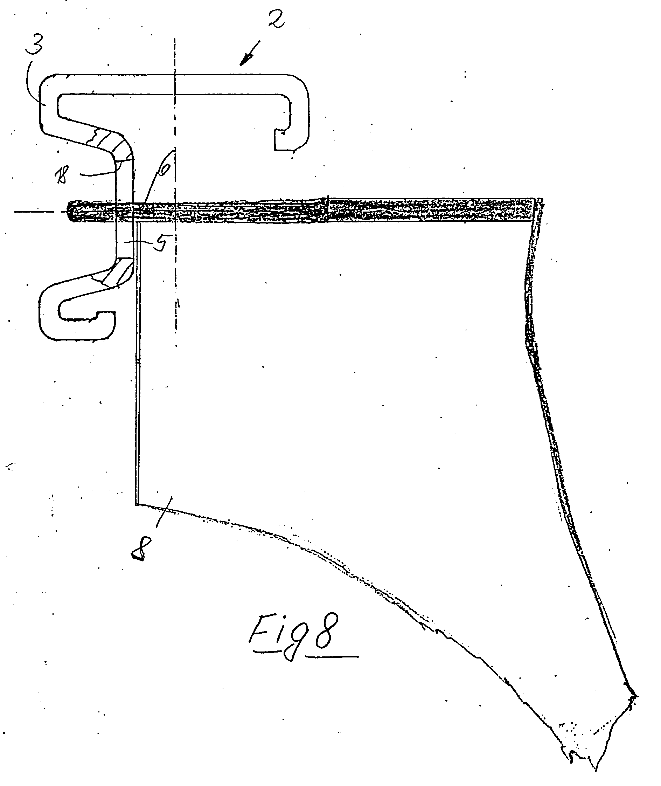

Eine bevorzugte Ausführungsform des Winkelprofils 2 ist in Fig. 5 und Fig. 6 dargestellt. Bei dieser Ausbildung wird der Schenkel 3 des Winkelprofils 2 auf seiner gesamten Länge mit einer Einprägung 17 versehen, wie dies deutlich gemacht ist in den Fig. 2 und 3. In dem dem Schenkel 3 parallelen Bereich der Einprägung werden nun über die gesamte Länge der Einprägung in dichter Folge Einhängeschlitze 18 in der Form von Langlöchern eingebracht und es können nunmehr die Zwischenböden 8 mit ihren Auflagearmen 6 bzw. 7 (siehe Fig. 7 und 8) auf die jeweilige, eine Auflagestütze 5 bildende, untere Fläche eines solchen Einhängeschlitzes 18 eingehängt werden. Hierbei ist es gleichgültig, ob die Auflagearme 6 bzw. 7 der Einlegeböden 8 gerade verlaufen, wie in Fig 8 dargestellt oder abgewinkelt verlaufen, wie in Fig. 7 dargestellt. Auch die Ausbildung der Winkelprofile 2 wird hierdurch nicht beeinträchtigt. Es ist lediglich erforderlich, die Winkelprofil 2 in anderer Anordnung in die Steckstücke 9 einzustecken.

Eine vorteilhafte Weiterbildung des Winkelprofils 2 wird in der Anordnung eines Querstegs 19 gesehen, wie er deutlich dargestellt ist in den Fig. 2, 3, 5 und 6. Der Quersteg 19 ist in einem geeigneten Abstand 20 von der Innenseite des zum Schenkel 3 rechtwinklig verlaufenden zweiten Schenkels des Winkelprofils 2 angeordnet. Hierzu stößt er mit seiner ersten Stirnseite gegen die Innenseite der Einprägung 17 und ist dort verschweißt. Im Bereich der zweiten Stirnseite liegt der Quersteg auf einem entsprechend umgebogenen Endteil des zum Schenke 3 rechtwinklig angeordneten weiteren Schenkels des Winkelprofils 2 auf und ist dort ebenfalls verschweißt. Diese Anordnung ist deutlich erkennbar in den Fig. 5 und 6.
Von diesen Querstegen 19 werden über die Länge des Winkelprofile 2 verteilt nur einige benötigt. Manchmal reicht nur ein einzelner solcher Steg aus, der z. B. bei eingesteckten Winkelprofilen in der oberen Hälfte der Gesamtlänge angeordnet ist. Hierdurch wird nämlich das Transportgestell oder der Transportwagen besonders geeignet für den Rücktransport einer großen Anzahl von leeren Einlegeböden. Um die leeren Einlegeböden 8 transportieren zu können, werden die Winkelprofile 2 in den Steckstücken 9 umgesteckt, so daß die Einhängeschlitze nicht mehr auf einer rechtwinklig zur Längskante des Grundrahmens sondern auf einem Schenkel in paralleler Anordnung zur Längskante des Grundrahmens liegen. Die Auflagearme 6 können dann nicht mehr in die Einhängeschlitze 18 eingehängt werden und es können vielmehr alle Einlegeböden 8 aufeinandergelegt werden, wie dies Fig. 2 zeigt. Sie werden hierbei von den Winkelprofilen 2 geführt und gehalten. Um die Winkelprofile 2 jedoch zu stabilisieren kann in bestimmten Abständen oder auch nur ein einziges Mal in der vorgesehenen Höhe ein Einlegeboden 8 mit seinen Auflagearmen 6 mittels der darin vorgesehenen Einhängeschlitze 26 in den jeweiligen Quersteg 19 eingehängt werden, so daß hierdurch die Winkelprofile 2 stabilisiert werden. Hierdurch gelingt es, eine sehr große Anzahl von Einlegeböden 8 gleichzeitig leer mit einem solchen Transportgestell oder Transportwagen zurückzutransportieren, ohne daß die Gefahr besteht, daß wegen der von den Einlegeböden 8 bei Beschleunigung und Verzögerung auf die Winkelprofile 2 ausgeübten Kräfte diese aufbiegen könnten und damit zerstört wären und zusätzlich die Einlegeböden herausfielen.

Um das Einhängen der Einlegeböden an allen vier Ecken in gleicher Höhe zu erleichtern, sind von außen erkennbare Markierungen 21 vorgesehen, bestehend aus mindestens zwei unterschiedlichen Zeichen, die jeweils einem Einhängeschlitz zugeordnet sind und sich abwechseln, so daß beim Einhängen immer die richtige Lage einfach erkennbar ist.

Mit der erfindungsgem. Gestaltung des Transportgestells bzw. des Transportwagens und insbesondere der Säulen 1 und der Steckstücke 9 als Winkelprofil 2 bzw. Winkelprofilstücke 10 gelingt es, soviel Platz zu schaffen, daß auf den Einlegeböden 8 und diese vollständig belegend Transportbehälter in Euro-Norm-Abmessungen ohne Behinderung aufgesetzt werden können. Fig. 5 zeigt in der dort vorhandenen Kreisbogenlinie, die der Grenzlinie der schraffierten Fläche nach Fig. 4 entspricht, daß durch die erfindungsgem. Konstruktion der erforderliche Platz geschaffen wurde. Damit können solche Transportgestelle bzw. Transportwagen ohne Veränderung der Außenabmessung erstmals optimal genutzt werden.

Figur 1a zeigt eine Bauvariante zu Figur 1 bei der bei gleicher Lage der Einlegeböden der Grundrahmen 23 um 90° verdreht dargestellt ist. Der Grundrahmen ist in seinen Abmessungen auf Europalettenmaß 27 abgestimmt, so daß das Transportgestell auf eine Europalette 28 aufgesetzt werden kann. Hierbei weisen die sich gegenüberliegenden langgestreckten Rahmenelemente etwa in der Mitte zwei weitere, benachbart angeordnete Steckstücke 9 für weitere Winkelprofile 2 auf, so daß das Transportgestell bei Variation der Anzahl und/oder Anordnung der Einlegeböden in zwei unterschiedliche Abteilungen aufgeteilt werden kann, bei der eine Abteilung z.B. keine Einlegeböden für einen Transport von Hochpflanzen aufweist.

### Liste der verwendeten Bezugszeichen

- 1: Säulen
- 2: Winkelprofil
- 3: Schenkel
- 5: Auflagestützen
- 6: Auflagearme
- 7: Auflagearme
- 8: Einlegeböden
- 9: Steckstücke
- 10: Winkelprofilstücke
- 11: Außenseite
- 12: Außenseite
- 13: Schenkelsteckstücke
- 14: Schenkelsteckstücke
- 15: schmaler überstehender Bereich
- 16: schmaler überstehender Bereich
- 17: Einprägung
- 18: Einhängeöffnung
- 19: Quersteg
- 20: Abstand
- 21: Markierung
- 22: Auflagestücke
- 23: Grundrahmen
- 24: Boden
- 25: Rollen
- 26: Einhängeöffnung
- 27: Europalettenmaß
- 28: Palette

## Patentansprüche

1. Transportgestell mit einem rechtwinkligen Grundrahmen (23), der an seinen Ecken winklige, vertikal angeordnete Steckstücke (9) mit je einem an der Unterseite vorgesehenen Auflagestück (22) zur Aufnahme und Abstützung von Tragsäulen (1) für Zwischenböden (8), die über Auflagearme (6, 7) in Auflagestützen (4, 5) der Tragsäulen (1) einhängbar sind, aufweist, wobei zur Bildung des Grundrahmens (23) zwischen den Steckstücken (9) langgestreckte Rahmenelemente vorgesehen sind, wobei die Säulen (1) aus einem zu den Zwischenböden (8) hin offenen Winkelprofil (2) gebildet sind, dessen einer Schenkel (3) auf seiner Innenseite über seine Länge im Abstand zueinander verteilt angeordnete Auflagestützen (5) für die Auflagearme (6, 7) der Einlegeböden (8) aufweist, dadurch gekennzeichnet, daß nur der eine Schenkel (3) des Winkelprofils (2) auf seiner ganzen Länge eine Einprägung (17) nach innen aufweist, wobei diese Einprägung (17) in gewünschtem Abstand untereinander Einhängeöffnungen (18) für die Auflagearme (6, 7) aufweist, deren untere Oberfläche je eine Auflagestütze (5) bildet, wobei die Steckstücke (9) als offene, mindestens die beiden Außenseiten (11, 12) der Säulen (1) umfassende Winkelprofilstücke (10) ausgebildet sind.

2. Transportgestell nach Anspruch 1, dadurch gekennzeichnet, daß die freien Enden der Schenkel (13) der die Steckstücke (9) bildenden Winkelprofilstücke (10) mit einem schmalen, überstehenden Bereich (15, 16) rechtwinklig nach innen umgebogen sind zur weiteren Umfassung je einer eingesteckten, vom Winkelprofil (2) gebildeten Säule (1).

3. Transportgestell nach einem der Ansprüche 1 bis 2, dadurch gekennzeichnet, daß bei eingesetztem Winkelprofil (2) in einer geeigneten Höhenlage mindestens ein Quersteg (19) im Abstand (20) zu dem zum ersten Schenkel (3) rechtwinklig angeordneten weiteren Schenkel des Winkelprofils (2) und parallel zu diesem angeordnet ist, so, daß darauf jeweils ein Auflagearm (6, 7) eines Einlegebodens abgelegt werden kann.

4. Transportgestell nach einem der Ansprüche 1 bis 3, dadurch gekennzeichnet, daß allen Auflagestützen (5) jeweils im Wechsel eine außen angebrachte Markierung (21) zugeordnet ist, um Auflagestützen (5) gleicher Höhe erkennbar zu machen.

5. Transportgestell nach einem der Ansprüche 1 bis 4, dadurch gekennzeichnet, daß etwa auf der Hälfte der sich gegenüberliegenden langgestreckten Rahmenelemente des Grundrahmens (23) jeweils zwei weitere Steckstücke (9) als Fixierung für je ein weiteres Winkelprofil (2) vorgesehen sind.

## Claims

1. A transporting rack with a rectangular base frame (23), which has at its comers angular vertically disposed push-in pieces (9) on the underside of each of which there is a resting piece (22) to receive and support columns (1) for carrying intermediate shelves (8) which can be fitted into supporting rests (4,5) in the support columns (1) and onto support arms (6,7), whereby elongated frame elements are provided between the push-in pieces (9) to form the base frame (23), the columns (1) being formed from an angled profile section (2) which is open towards the intermediate shelves (8) and one flange (3) of which has on its inside face and spaced at intervals over its length supporting rests (5) for the support arms (6,7) of the intermediate shelves (8), characterised in that only one flange (3) of the angled profile section (2) having over its entire length an inwardly directed indentation (17) which has, at the desired distance apart, apertures (18) for insertion of the support arms (6,7), the undersurface of each of which forms a supporting rest (5), the push-in pieces (9) being constructed as open angled profiled members (10) comprising at least the two outside faces (11,12) of the columns (1).

2. A transporting rack according to Claim 1, characterised in that the free ends of the flanges (13) of the angled profiled members (10) forming the push-in pieces (9) have a narrow projecting area (15,16) bent over inwardly at a right angle, for each to engage furthermore around an inserted coloumn (1) formed by the angled profiled section (2).

3. A transporting rack according to one of Claims 1 to 2, characterised in that with ale angled profiled section (2) inserted and at a suitable height, at least one transverse web (19) is disposed at a distance (20) from the further flange of the angled profiled section (2) which is at right angles to the first flange (3) and parallel with the angled profiled section (2), so that a support arm (6,7) of an intermediate shelf can be placed on each one.

4. A transporting rack according to one of Claims 1 to 3, characterised in that alternating and externally applied markings (21) are associated with all supporting rests (5) in order to identify supporting rests (5) which are at the same height.

5. A transporting rack according to one of Claims 1 to 4, characterised in that approximately at half the oppositely disposed elongated frame elements of the base frame (23) there are in each case two further push-in pieces (9) as fixings for in each case one further angled profiled section (2).

## Revendications

1. Châssis de transport comprenant un cadre de base (23) à angles droits, lequel présente, au niveau de ses angles, des éléments d'emboîtement (9) angulaires agencés à la verticale dotés, respectivement, d'un élément d'appui (22) prévu en sous-face, destiné à accueillir et soutenir des montants porteurs (1) pour des fonds intermédiaires (8) à accrocher dans des supports d'appui (4, 5) des montants porteurs (1), grâce à des bras d'appui (6, 7), châssis dans lequel des éléments de cadre allongés sont prévus entre les éléments d'emboîtement (9) pour former le cadre de base (23), les montants (1) étants constitués d'un profit d'angle (2) ouvert dans la direction des fonds intermédiaires (8) et dont un côté (3) présente, sur sa face intérieure, des supports d'appui (5) répartis sur sa longueur à distance les uns des autres, destinés aux bras d'appui (6, 7) des tablettes de rayonnage (8), caractérisé en ce que seulement ledit côté (3) du profit d'angle (2) présente, sur toute sa longueur, un renfoncement (17) vers l'intérieur, ce renfoncement (17) présentant à une distance souhaitée les uns des autres, des orifices d'accrochage (18) destinés aux bras d'appui (6, 7) et dont la surface inférieure constitue chaque fois un support d'appui (5), les éléments d'emboîtement (9) étant réalisés sous forme d'éléments de profit d'angle (10) ouverts, embrassant au moins les deux faces extérieures (11, 12) des montants (1).

2. Châssis de transport suivant la revendication 1, caractérisé en ce que les extrémités libres des côtés (13) des éléments de profit d'angle (10) constituant les éléments d'emboîtement (9) sont repliées à angle droit vers l'intérieur, avec une zone étroite en saillie (15, 16), pour embrasser davantage un montant (1) respectif emboîté, formé par le profit d'angle (2).

3. Châssis de transport suivant l'une quelconque des revendications 1 à 2, caractérisé en ce que lorsque le profit d'angle (2) est inséré, au moins une barrette transversale (19) est disposée à une position en hauteur appropriée, à une distance (20) de l'autre côté du profit d'angle (2) agencé d'équerre par rapport au premier côté (3), et parallèlement par rapport audit autre côté, de façon à pouvoir y déposer, chaque fois, un bras d'appui (6, 7) d'une tablette de rayonnage.

4. Châssis de transport suivant l'une quelconque des revendications 1 à 3, caractérisé en ce que tous les supports d'appui (5) se voient associer, en alternance, un repère (21) apposé à l'extérieur, pour permettre la reconnaissance de supports d'appui (5) de même hauteur.

5. Châssis de transport suivant l'une quelconque des revendications 1 à 4, caractérisé en ce qu'au milieu, environ, des éléments de cadre allongés du cadre de base (23) positionnés en vis-à-vis, on prévoit chaque fois deux autres éléments d'emboîtement (9) comme fixation, respectivement, pour un profit d'angle (2) supplémentaire.
